## Europäisches Patentamt

## European Patent Office

## Office européen des brevets

(19)

(11) Veröffentlichungsnummer: **0 283 042 B1**

(12) # EUROPÄISCHE PATENTSCHRIFT

(45) Veröffentlichungstag der Patentschrift:
08.08.90

(51) Int. Cl.⁵: **B65G 57/03**

(21) Anmeldenummer: **88104381.4**

(22) Anmeldetag: **18.03.88**

(54) Verfahren und Vorrichtung zum Palettieren von einzelnen Palettenlagen.

(30) Priorität: **19.03.87 DE 3709070**

(73) Patentinhaber: **Barnickel, Thomas C., Am Neuenhof 1 a, D-5000 Köln 41(DE)**

(43) Veröffentlichungstag der Anmeldung:
**21.09.88 Patentblatt 88/38**

(72) Erfinder: **Barnickel, Thomas C., Am Neuenhof 1 a, D-5000 Köln 41(DE)**

(45) Bekanntmachung des Hinweises auf die Patenterteilung:
**08.08.90 Patentblatt 90/32**

(74) Vertreter: **Patentanwälte Grünecker, Kinkeldey, Stockmair & Partner, Maximilianstrasse 58, D-8000 München 22(DE)**

(84) Benannte Vertragsstaaten:
**AT BE CH DE ES FR GB LI NL SE**

(56) Entgegenhaltungen:
**WO-A-85/03499**
**BE-A- 652 039**
**DE-B- 1 215 591**
**FR-A- 2 499 955**
**US-A- 3 458 058**

**Beschreibung**

Die Erfindung betrifft ein Verfahren zum Palettieren von einzelnen Palettenlagen, bei dem die einzelnen Palettenlagen, die hintereinanderliegend auf einer Förderebene in eine Abstapelposition gefördert werden, von dort unter Bildung eines auf einer Palette ruhenden Stapels an einen Palettierer einer Palettiervorrichtung übergeben werden.

Die Erfindung betrifft ferner eine Vorrichtung, mit der ein solches Verfahren durchführbar ist.

Es ist im Stand der Technik weit verbreitet und bekannt, einzelne sogenannte Palettenlagen unter Bildung eines Stapels auf einer Palette anzuordnen. Mit Hilfe der Palette läßt sich der so gebildete Stapel dann beispielsweise mit Gabelstaplern oder dergleichen an einen gewünschten Ort, beispielsweise in eine Lagerhalle überbringen. Auch zum Transport ist es üblich, Palettenlagen, beispielsweise von Getränkekästen unter Bildung von Stapeln auf Paletten anzuordnen.

Die Erfindung will ein Verfahren angeben, bei dem einzelne Palettenlagen, die hintereinanderliegend auf einer Förderebene an eine Abstapelposition gefördert werden, mit hoher Abstapelgeschwindigkeit kontinuierlich und zuverlässig unter Bildung von hohen Stapeln auf eine Palette überführt werden können.

Zur Lösung dieser Aufgabe ist das erfindungsgemäße Verfahren dadurch gekennzeichnet, daß eine erste Hebebühne des Palettierers auf die Förderebene angehoben wird, daß die erste Palettenlage von der Abstapelposition in Höhe der Förderebene auf die erste Hebebühne überführt wird, daß die erste Hebebühne um die Höhe der ersten Palettenlage abgesenkt wird, so daß die Oberfläche der ersten Palettenlage in der Förderebene zu liegen kommt, daß eine zweite Palettenlage von der Abstapelposition auf die erste Palettenlage geschoben wird, daß die erste Hebebühne erneut um die Höhe der zweiten Palettenlage abgesenkt und eine nächste Palettenlage auf die zweite Palettenlage geschoben wird, daß dieser Absenkungs- und Überführvorgang dann so lange durchgeführt wird, bis die erste Hebebühne ihre maximale Absenkposition am Palettierer erreicht hat und ein erster Teilstapel gebildet ist, daß die erste Hebebühne in eine Position gehoben wird, in der sie um mindestens eine Palettenlage über der Förderebene liegt, daß eine zweite, am Palettierer vorhandene Hebebühne, die eine Palette trägt, in die Förderebene gehoben wird, daß eine weitere Palettenlage von der Abstapelposition auf die Palette der zweiten Hebebühne überführt wird, daß analog zu dem Vorgehen mit der ersten Hebebühne das Absenken und Überführen mit der zweiten Hebebühne durchgeführt wird, bis die zweite Hebebühne ihre maximale Absenkposition erreicht hat und ein zweiter Teilstapel gebildet ist, daß die erste Hebebühne abgesenkt und unter der unteren Fläche der ersten Palettenlage weggefahren wird, so daß die erste Palettenlage auf der obersten Palettenlage der zweiten Hebebühne zu liegen kommt und daß schließlich der so gebildete Stapel aus dem Palettierer ausgefahren wird.

Dieses Verfahren erlaubt eine hohe Abstapelgeschwindigkeit ohne Unterbrechung, d.h., eine kontinuierliche Lagenstapelung, da die hintereinanderliegend in einer Förderebene, beispielsweise auf einem Förderband, angeförderten Palettenlagen fortlaufend an den Palettierer übergeben werden, wobei zunächst die erste Hebebühne entsprechend der Höhe der jeweils neu aufzunehmenden Palettenlage nach unten gefahren wird. Dies geschieht so Lange, bis die erste Hebebühne ihre maximale Absenkposition erreicht hat. Durch das Anheben der ersten Hebebühne über die Förderebene hinweg wird die Möglichkeit geschaffen, daß die weiteren, angeförderten Palettenlagen nun auf eine zweite Hebebühne übergeben werden, die die Palette trägt und die ebenfalls so abgesenkt wird, daß die jeweils weiter angeförderten Palettenlagen in der Förderebene überschoben werden können, bis auch die zweite Hebebühne ihre maximale Absenklage erreicht hat. Nach Absenken des Teilstapels, der auf der ersten Hebebühne anfänglich erzeugt worden ist, kann dann die erste Hebebühne unter der ersten Palettenlage weggezogen werden, so daß diese erste Palettenlage auf der obersten Lage der zweiten Hebebühne zu liegen kommt. Dadurch, daß die einzelnen Palettenlagen jeweils in der Förderebene lediglich überschoben werden müssen, lassen sich sehr saubere, kantengenaue Endstapel bilden. Es sind keine baulichen Veränderungen, wie etwa Gruben- oder Paternosterbewegungen von Stapellagen oder Gütern erforderlich, die auf ein höheres Niveau gestapelt werden. Diese werden vielmehr als Teilstapel über die Förderebene mit Hilfe der ersten Hebebühne angehoben.

Nachdem so ein Stapel einer Höhe gebildet wird, die etwa doppelt so hoch ist wie die Höhe der Anförderebene bezüglich des Bodens, an dem der Palettierer eingesetzt wird, kann der Stapel dann aud der Maschine ausgefahren werden. Es wird dann eine neue Palette auf die zweite Hebebühne geschoben und die Vorgänge wiederholen sich kontinuierlich.

Beim Stapeln gemäß diesem Verfahren wird nur äußerst wenig Platz benötigt, da, wie erwähnt, keine Paternosterbewegungen der einzelnen Stapellagen erforderlich sind, was zu einer Verbreiterung der zur Durchführung der Verfahrens erforderlichen Vorrichtungen führen würde.

In einer vorteilhaften Ausgestaltung des Verfahrens ist vorgesehen, daß die Höhe der an der Abstapelposition ankommenden Palettenlagen optoelektronisch oder auch mechanisch erfaßt wird und daß die Absenkbewegung der Hebebühnen in Abhängigkeit der gemessenen Höhe gesteuert wird. Diese Verfahrensfortbildung bringt insbesondere dann Vorteile, wenn die einzelnen zu stapelnden Palettenlagen unterschiedliche Höhen haben. Die Höhenmessung kann beispielsweise mit Fotozellenreihen oder auch mit mechanischen Abtastern einfach erfolgen. In Abhängigkeit dieser gemessenen Höhe läßt sich dann die Hebebühne entsprechend absenken. Dadurch wird sichergestellt, daß auch Gegenstände unterschiedlicher Höhe jeweils in der Förderebene von der Abstapelposition horizontal an den Palettierer übergeben werden können. Dies kann beispielsweise durch einfaches überschieben erreicht werden, so daß keine gesonderten Greifer oder weitere Hilfsmittel erforderlich sind.

Gemäß einer Weiterbildung des Verfahrens ist vorgesehen, daß einzelne Palettenlagen zur Bildung eines zusätzlichen, zweiten Stapels an einen zusätzlichen, zweiten Palettierer der Palettiervorrichtung übergeben werden. Auf diese Weise können erheblich mehr Palettenlagen gestapelt werden, als dies bei Bildung lediglich eines einzigen Stapels möglich ist. Beispielsweise beträgt die Erhöhung der Ausstoßgeschwindigkeit etwa 40 %, wenn die einzelnen Palettenlagen abwechselnd an den einen und den jeweils anderen Palettierer übergeben werden.

Es ist natürlich auch möglich, die einzelnen Palettenlagen zunächst an einen Palettierer zur Bildung je eines Teilstapels und an den jeweils anderen Palettierer zur Bildung je eines anderen Teilstapels zu übergeben. Alternativ können die einzelnen Palettenlagen auch zunächst zur Bildung des einen Stapels an den einen Palettierer und dann zur Bildung des jeweils anderen Stapels an den jeweils anderen Palettierer übergeben werden.

Eine Palettiervorrichtung zur Durchführung des geschilderten Verfahrens, die einen Palettierer mit einer ersten Hebebühne aufweist, die an einem sich im wesentlichen vertikal erstreckenden Rahmen an beiden Seiten heb- und senkbar befestigt ist, ist dadurch gekennzeichnet, daß dem Palettierer eine zweite Hebebühne zugeordnet ist, die unterhalb der ersten Hebebühne liegt und die unabhängig von der ersten Hebebühne heb- und senkbar ist.

Durch die Zuordnung einer zweiten Hebebühne, die unabhängig von der ersten Hebebühne heb- und senkbar ist, läßt sich mit geringem Platzbedarf und ohne großen baulichen Aufwand das erfindungsgemäße Verfahren durchführen. Die Betätigung der beiden Hebebühnen kann über bekannte Mittel, wie Elektromotoren, hydraulische Motoren oder dergl. erfolgen.

Bei einer Ausführungsform ist die zweite Hebebühne in Ausgestaltung der Vorrichtung ebenfalls an dem sich vertikal erstreckenden Rahmen beidseitig geführt.

Bei einer anderen Variante ist die zweite Hebebühne als Scherentischbühne ausgebildet. Das Absenken und Anheben der Scherentischbühne erfolgt mit bekannten Mitteln, beispielsweise hydraulisch oder über einen elektrischen Antrieb. Als alternative Ausführungsform ist es aber ebenso möglich, beide Hebebühnen über eine Spindel und einen Hubmotor unabhängig voneinander anzutreiben.

In weiterer Ausgestaltung der Erfindung ist vorgesehen, daß die erste Hebebühne in einer Horizontalebene durch den sich im wesentlichen vertikal erstreckenden Rahmen hindurch zur anderen Seite des Rahmens verschiebbar gelagert ist. Die erste Hebebühne läßt sich dann einfach aus der Lage, in der sie den zuerst gebildeten Teilstapel trägt, beim Absenken dieses Teilstapels auf den Teilstapel der zweiten Hebebühne unter der ersten Palettenlage wegziehen, so daß der erste Teilstapel unmittelbar auf dem zweiten Teilstapel zu liegen kommt.

In weiterer Ausgestaltung der Vorrichtung ist vorgesehen, daß die zweite Hebebühne in ihrer maximalen Absenkstellung in einer Ebene mit einem Anförderband liegt, auf dem einzelne Paletten angefördert werden. Dies ermöglicht es, automatisch die zweite Hebebühne mit Paletten zu beschicken, wenn die jeweils fertig erzeugten Stapel aus dem Palettierer abgefahren werden.

In weiterer Ausgestaltung der Erfindung ist vorgesehen, daß der Palettierer seitlich an einem Förderband angeordnet ist, an dem die Palettenlagen nacheinander angefördert werden. Die seitliche Anordnung ermöglicht es, beispielsweise Palettenlagen nur einer bestimmten Höhe aus einer ganzen Reihe angeförderter Palettenlagen auszusortieren, während die nicht diese Höhe aufweisenden Palettenlagen auf dem Förderband weitertransportiert werden.

Es ist jedoch genauso möglich, den Palettierer am stirnseitigen Ende eines Förderbandes anzuordnen, so daß die Palettenlagen automatisch am Ende des Förderbandes jeweils an den Palettierer übergeben werden, ohne daß zusätzlich Ablenkmechanismen erforderlich sind, die man benötigt, wenn der Palettierer seitlich am Förderband angeordnet ist. In diesem Falle müssen die Palettenlagen aus ihrer Förderbahnbewegungsrichtung zum Palettierer hin geschoben bzw. abgelenkt werden.

Um die Ausstoßgeschwindigkeit der erfindungsgemäßen Palettiervorrichtung noch weiter zu erhöhen, kann ein zusätzlicher, zweiter Palettierer mit einem Rahmen sowie einer ersten und zweiten Hebebühne vorgesehen sein. In diesem Fall sind vorzugsweise an beiden Seiten des Förderbandes je ein Palettierer angeordnet.

Die Erfindung wird im folgenden anhand zweier in der Zeichnung dargestellten Ausführungsbeispiele weiter erläutert und beschrieben.

Figur 1 zeigt in einer schematischen perspektivischen Darstellung eine an einem Förderband angeordnete Palettiervorrichtung gemäß einem ersten Ausführungsbeispiel der Erfindung,

Figur 2 zeigt die Palettiervorrichtung nach Fig. 1 in einer schematischen Darstellung bei der Bildung eines Stapels,

Figur 3 zeigt die Palettierervorrichtung gemäß Fig. 1 nach Fertigstellung eines Stapels,

Figur 4 ist eine Draufsicht auf die an einem Förderband angeordnete Palettiervorrichtung nach Fig. 1,

Figur 5 zeigt eine Palettiervorrichtung gemäß einem zweiten Ausführungsbeispiel der Erfindung in einer schematischen Darstellung bei der Bildung zweier Stapel,

Figur 6 zeigt die Palettiervorrichtung gemäß Fig. 5 nach Fertigstellung zweier Stapel, und

Figur 7 ist eine Draufsicht auf die an einem Förderband angeordnete Palettiervorrichtung nach Fig. 5.

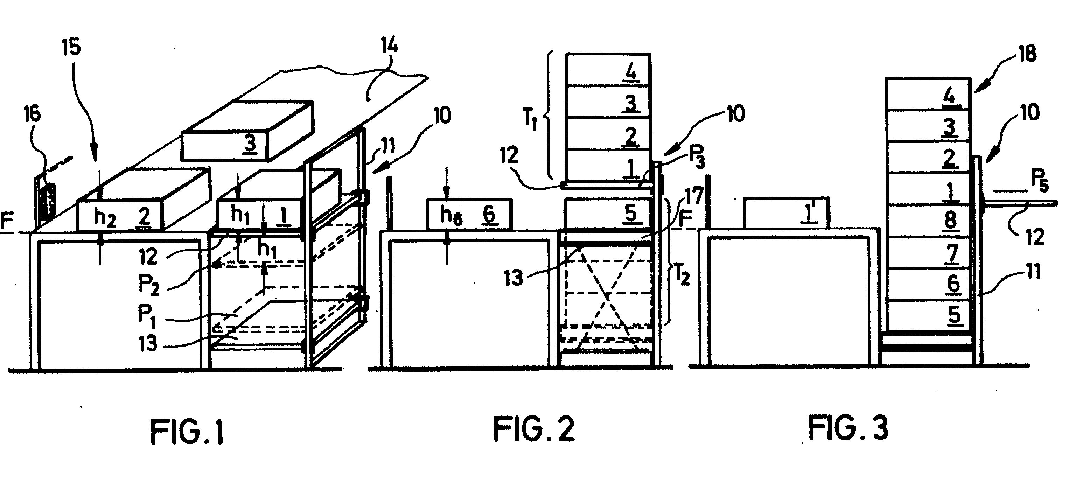

In Figur 1 umfaßt die Palettiervorrichtung einen insgesamt mit dem Bezugszeichen 10 versehenen Palettierer. Der Palettierer weist einen sich vertikal erstreckenden Rahmen 11 auf, an dem eine erste Hebebühne 12 heb- und senkbar geführt ist. Die maximale Absenkposition $P_1$ der Hebebühne ist gestri-

chelt in Figur 1 dargestellt. Unterhalb der ersten Hebebühne 12 ist eine zweite Hebebühne 13 angeordnet, die, wie insbesondere Figur 2 erkennen läßt, als Scherentisch ausgebildet ist. Diese Hebebühne ist an diesem Ausführungsbeispiel nicht mit dem Rahmen 11 verbunden. Sie kann unabhängig von der Hebebühne 12 angehoben und abgesenkt werden.

Der Palettierer 10 ist seitlich eines Förderbandes 14 angeordnet, auf dem einzelne Palettenlagen angefördert werden. Die ankommenden Palettenlagen sind in der Reihenfolge ihrer Ankunft an der Abstapelposition 15 mit dem Bezugszeichen 1 bis 8 versehen.

Die entsprechenden Antriebe zum Heben und Senken der beiden Hebebühnen 12 und 13 sind aus Gründen der Einfachheit nicht dargestellt. Zu diesem Zweck können beliebige bekannte Antriebssysteme eingesetzt werden, beispielsweise auch Hubmotoren mit Spindelverstellung.

Im Bereich der Abstapelposition 15 ist des weiteren eine elektrooptische Meßvorrichtung 16 angeordnet, die die Höhe der jeweils ankommenden Palettenlagen erfaßt. Im Falle der Figur 1 wäre dies die Höhe $h_2$ der Palettenlage 2.

Die Mittel, mit denen die jeweils hintereinanderliegend auf dem Förderband 14 angeförderten Palettenlagen auf den Palettierer 10 überschoben werden, sind ebenfalls nicht dargestellt. Es kann sich hierbei um übliche Ablenkschienen aber auch Ausstoßfinger oder dergl. handeln, mit denen die Palettenlagen an der Abstapelposition 15 zur Seite des Bandes weg auf den Palettierer 10 geschoben werden, wobei eine am Rande des Förderbandes 14 angeordnete Leitplanke 20 abgesenkt wird.

Im folgenden wird nun der Verfahrensablauf zur Bildung eines Stapels 18 anhand der Figuren 1 bis 3 erläutert. Im Ruhezustand befindet sich die erste Hebebühne 12 in ihrer abgesenkten Position $P_1$ im wesentlichen unmittelbar über der zweiten Hebebühne 13. Wenn nun die erste Plattenlage auf dem Förderband 14 zu der Abstapelposition 15 gefördert wird, wird die erste Hebebühne 12 auf die Höhe der Förderebene F angehoben, so daß sie horizontal mit dem Förderband 14 ausgerichtet ist. Die erste ankommende Palettenlage 1 wird dann von der Abstapelposition 15 auf die erste Hebebühne mit nicht näher gezeigten Mitteln überführt, so daß sich der in Figur 1 gezeigte Zustand ergibt. Dabei hat die optolektronische Einrichtung 16 die Höhe $h_1$ der ersten Palettenlage bereits gemessen, als diese Palettenlage noch an der Abstapelposition 15 auf dem Förderband lag. Nun wird die erste Hebebühne 12 unter Steuerung durch diese optoelektronische Einrichtung 16 um die Höhe $h_1$ der ersten Plattenlage in die Position $P_2$ abgesenkt, so daß die Oberfläche der ersten Palettenlage in der Förderebene F zu liegen kommt. Zwischenzeitlich mißt die optoelektronische Einrichtung 16 $h_2$ derzweiten Plattenlage 2. Nun wird die zweite Plattenlage 2 auf die Oberfläche der ersten Palettenlage 1 aufgeschoben. Danach wird die erste Hebebühne 12 erneut, diesmal jedoch um die Höhe $h_2$ der zweiten Palettenlage in eine nun nicht mehr näher gezeigte Position abgesenkt, wobei dieser Vorgang nun fortlaufend wiederholt wird, bis die erste Hebebühne ihre maximale Absenkposition $P_1$ erreicht hat. In dem gezeigten Ausführungsbeispiel wird diese Position nach dem Überschieben der vierten Palettenlage erreicht.

Nun wird die erste Hebebühne 12 in eine Position $P_3$ angehoben, wie sie in Figur 2 gezeigt ist. Mit anderen Worten, hebt die Hebebühne nun den Teilstapel $T_1$, der aus den einzelnen Palettenlagen 1 bis 4 gebildet wurde, über die Förderebene F an. Das Anheben geschieht so weit, daß sie das Unterschieben der weiteren geförderten Palettenlagen nicht beeinträchtigt.

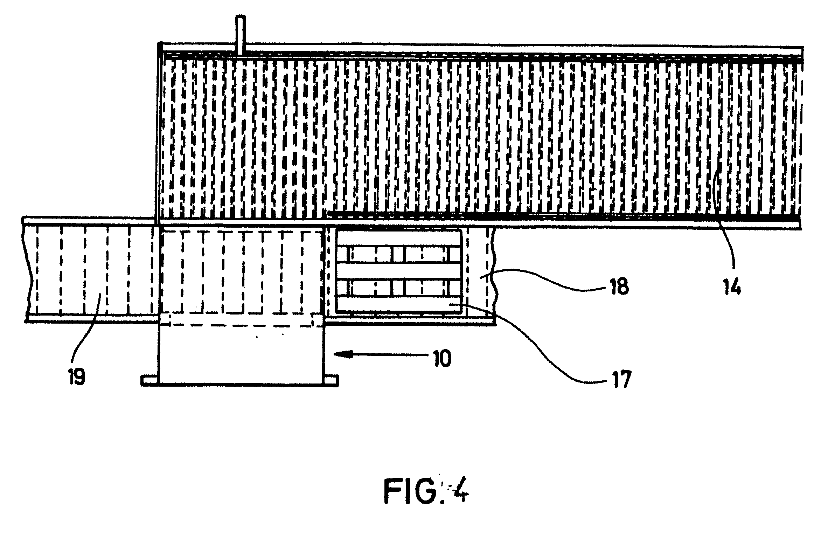

Zwischenzeitlich wurde auf die zweite Hebebühne 13 eine Palette 17 aufgeschoben, was beispielsweise mit Hilfe eines Palettenförderbands 18 geschehen kann, wie dies Figur 4 zeigt. Nun wird die als Scherentisch ausgebildete zweite Hebebühne 13 so weit angehoben, daß die Oberfläche der Palette 17 wiederum in Höhe der Förderebene F ausgerichtet zu liegen kommt. Es wird nun die fünfte Palettenlage auf die Palette 17 überführt. Danach wird die Hebebühne ggf. wiederum unter Steuerung durch die elektrooptische Einrichtung so weit abgesenkt, daß die Oberkante der fünften Palettenlage wieder mit der Förderebene F bündig abschließt, so daß nun die Palettenlage 6 überführt werden kann. Dieser Vorgang wird so lange fortgesetzt, bis auch die zweite Hebebühne 13 ihre maximale Absenkposition (vgl. Figur 1) erreicht hat. In dem gezeigten Ausführungsbeispiel sind dann erneut vier weitere Palettenlagen unter Bildung des Teilstapels $T_2$ erzeugt worden. In Figur 2 ist dieser Teilstapel $T_2$ insgesamt gestrichelt dargestellt. Die Hebebühne 13 muß nicht unbedingt als Scherentischbühne ausgebildet sein, vielmehr kann auch diese Hebebühne am Rahmen geführt über einen geeigneten Hubmotor heb- und senkbar angeordnet bzw. geführt sein.

Nun wird die erste Hebebühne 12 wieder so weit abgesenkt, bis sie in etwa auf der Oberfläche der obersten Palettenlage, im gezeigten Ausführungsbeispiel die Palettenlage 8 der zweiten Hebebühne aufliegt. Danach wird die erste Hebebühne durch den Rahmen 11 hindurch in Pfeilrichtung $P_5$ (Figur 3) verfahren, bis sie die in Figur 3 gezeigte Position einnimmt. In dieser Position ist also die Hebebühne 12 vollständig unter der Unterseite der ersten Palettenlage 1 weggezogen worden, so daß nun die Palettenlage 1 auf der Palettenlage 8 aufsitzt. Damit ist der Gesamtstapel 18, der aus 8 Palettenlagen besteht, fertiggestellt und kann mit bekannten Mitteln, beispielsweise mit einem Förderband oder auch mit Gabelstaplern oder dergl. aus dem Palettierer 10 abtransportiert werden. Beginnend mit der neuen Palettenlage 1' werden Vorgänge unter Bildung eines nächsten Stapels wiederholt.

Es versteht sich, daß die Steuerung mit Hilfe der optoelektronischen Einrichtung 16 nicht in jedem Falle erforderlich ist. Insbesondere, wenn beispielsweise Kisten gleicher Höhe gestapelt werden sollen, ist eine solche Steuerung nicht erforderlich. Es können dann die Absenkschritte der beiden Hebebühnen entsprechend der gleichbleibenden Höhe der ankommenden Palettenlagen eingestellt werden.

Die Anordnung des Palettierers seitlich des Förderbandes 14 ist ebenfalls nicht die einzig mögliche. Der Palettierer kann auch am stirnseitigen Ende des Förderbandes angeordnet sein. Schließlich kann der Palettierer nicht nur im Zusammenhang mit einem Förderband verwendet werden, sondern beispielsweise auch zur Bildung von Stapeln beim Abladen von Kraftfahrzeugen an Laderampen oder dergl. eingesetzt werden.

Die vorstehend geschilderten Verfahrensabläufe machen deutlich, daß hier mit hoher Abstapelgeschwindigkeit ohne Unterbrechung gearbeitet werden kann, d.h., es erfolgt eine kontinuierliche Lagenstapelung. Der Palettierer benötigt nur äußerst wenig Platz. Die Gesamthöhe des Palettierers ist nur unwesentlich größer als die Förderebene F, in der die Beschickung mit dem einzelnen Palettenlagen erfolgt. Die Stapellagen, die auf ein höheres Niveau bewegt werden (Teilstapel T₁) werden nicht seitlich verschoben, erfahren also keine Paternosterbewegungen, wie sie im Stand der Technik häufig üblich sind, so daß sich ein sehr einfacher Aufbau des Palettierers ergibt. Schließlich erfolgt das Palettieren ohne ruckartigen Bewegungen, weil die jeweiligen Palettenlagen beim übereinanderschieben exakt gegeneinander ausgerichtet werden können. Dies führt letztlich auch zur sauberen, kantengenauen Endstapeln.

Die Draufsicht der Figur 4 zeigt das Förderband 14, auf dem die Palettenlagen angefördert werden. Der Palettierer 10 ist ebenfalls in Draufsicht schematisch gezeigt, wobei insbesondere zu erkennen ist, wie die einzelnen Paletten 17 auf einem Palettenförderband 18 angefördert und dann in den Palettierer 10 jeweils auf die zweite Hebebühne geschoben werden, wenn ein fertig gebildeter Stapel zur Abförderseite 19 hin wegtransportiert wurde.

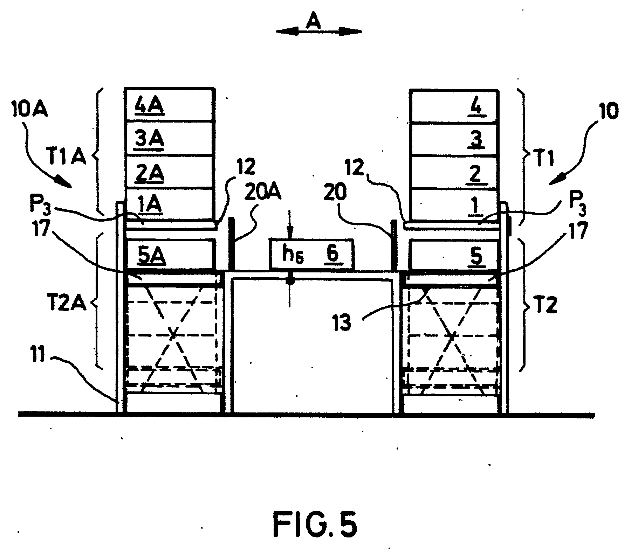

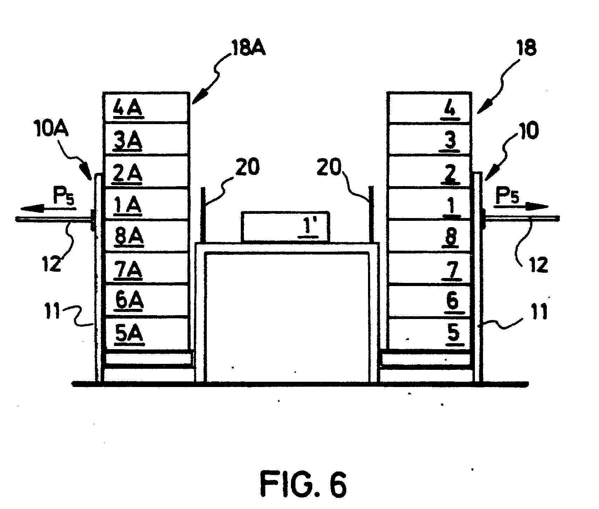

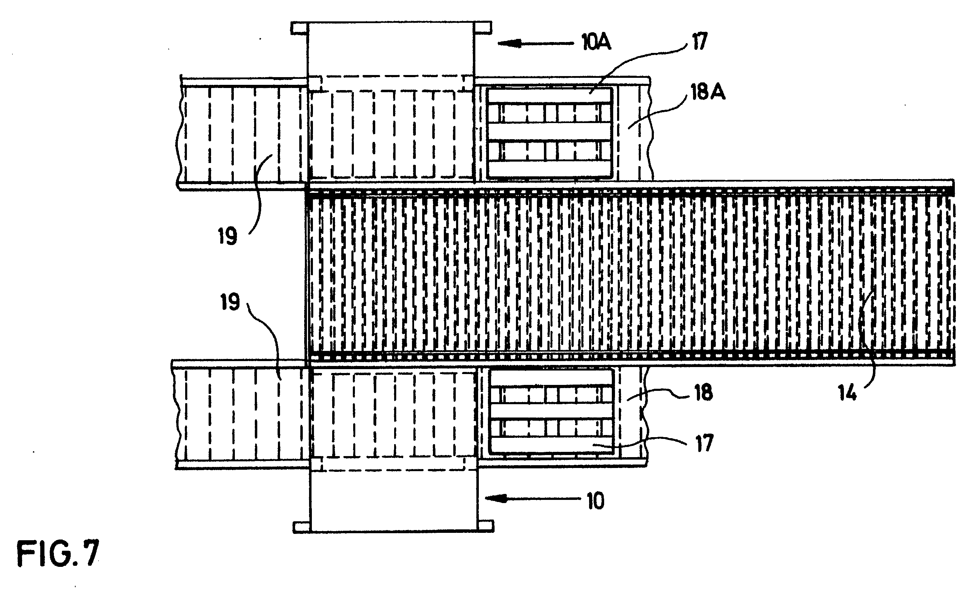

In den Figuren 5 bis 7 umfaßt die Palettiervorrichtung zwei beidseitig des Förderbandes 14 angeordnete Palettierer 10 und 10A, die beide im Aufbau und in der Funktion identisch sind, so daß sich eine Beschreibung des Palettierers 10A an dieser Stelle erübrigt. An beiden Rändern des Förderbandes 14 sind je eine versenkbare Leitplanke 20 und 20A angebracht. Die einzelnen, auf den Palettierer 10A überzuschiebenden Palettenlagen sind mit den Bezugszeichen 1A bis 8A bezeichnet. Die auf dem Förderband 14 antransportierten Palettenlagen 1 bis 8 und 1A bis 8A werden zur Bildung zweier Stapel 18 und 18A abwechselnd auf demnPalettierer 10 und auf den Palettierer 10A überführt. Dabei sind die Überführvorgänge der Palettenlagen 1 bis 8 und 1A bis 8A auf den Palettierer 10 bzw. 10A so auf die Absenk- bzw. Anhebbewegungen der Hebebühnen des jeweils anderen Palettierers 10A bzw. 10 abgestimmt, daß letztere Bewegungen keine Totzeiten der Palettiervorrichtung darstellen, Dadurch wird die Ausstoßgeschwindigkeit der Vorrichtung um etwa 40 % gesteigert. Um die Überführvorgänge zu ermöglichen, werden jeweils die Leitplanke 20 und 20A abwechselnd versenkt. Die dargestellte Anordnung der beiden Palettierer kann auch so abgeändert werden, daß einer derselben am stirnseitigen Ende des Förderbandes angeordnet ist.

## Patentansprüche

1. Verfahren zum Palettieren von einzelnen Palettenlagen (1 bis 8), wobei die einzelnen Palettenlagen hintereinanderliegend auf einer Förderebene (F) an eine Abstapelposition (15) gefördert und dort unter Bildung eines auf einer Palette (17) ruhenden Stapels (18) an einen Palettierer (10) einer Palettiervorrichtung übergeben werden, dadurch gekennzeichnet, daß eine erste Hebebühne (12) des Palettierers (10) auf die Förderebene (F) angehoben wird, daß die erste Palettenlage (1) von der Abstapelposition (15) in Höhe der Förderebene (F) auf die erste Hebebühne (12) überführt wird, daß die erste Hebebühne (12) um die Höhe (h₁) der ersten Palettenlage (1) abgesenkt wird, so daß die Oberfläche der ersten Palettenlage (1) in der Förderebene (F) zu liegen kommt, daß eine zweite Palettenlage (2) von der Abstapelposition (15) auf die erste Palettenlage (1) geschoben wird, daß die erste Hebebühne (12) erneut um die Höhe (h₂) der zweiten Palettenlage (2) abgesenkt und eine nächste Palettenlage (3) auf die zweite Palettenlage (2) geschoben wird, daß dieser Absenk- und Überführvorgang so lange durchgeführt wird, bis die erste Hebebühne (12) ihre maximale Absenkposition (P₁) am Palettierer (10) erreicht hat und ein erster Teilstapel (T1) gebildet ist, daß die erste Hebebühne (12) in eine Position (P₃) gehoben wird, in der sie um mindestens eine Palettenlage über der Förderebene (F) liegt, daß eine zweite, dem Palettierer zugeordnete Hebebühne (13), die eine Palette (17) trägt, in die Förderebene (F) so angehoben wird, daß die Oberfläche der Palette (17) in der Förderebene (F) liegt, daß eine weitere Palettenlage (5) von der Abstapelposition (15) auf die Palette der zweiten Hebebühne (13) überführt wird, daß das Absenken und überführen mit der zweiten Hebebühne (13) entsprechend durchgeführt wird, bis die zweite Hebebühne ihre maximale Absenkposition erreicht hat und ein zweiter Teilstapel (T2) gebildet ist, daß die erste Hebebühne (12) abgesenkt und unter der unteren Fläche der ersten Palettenlage (1) weggefahren wird (Pfeilrichtung P₅), so daß die erste Palettenlage (1) auf der obersten Palettenlage (8) der zweiten Hebebühne (13) zu liegen kommt und daß der so gebildete Stapel (18) aus dem Palettierer (10) ausgefahren wird.

2. Verfahren nach Anspruch 1, dadurch gekennzeichnet, daß die Höhe (h₁, h₂, hₙ) der an der Abstapelposition ankommenden Palettenlagen (1 bis 8) optoelektronisch oder mechanisch erfaßt wird und daß die Absenkbewegung der Hebebühnen (12, 13) in Abhängigkeit der gemessenen Höhe gesteuert wird.

3. Verfahren nach Anspruch 1 oder 2, dadurch gekennzeichnet, daß einzelne Palettenlagen (1A-8A) zur Bildung eines zusätzlichen, zweiten Stapels (18A) an einen zusätzlichen, zweiten Palettierer (10A) der Palettiervorrichtung übergeben werden.

4. Verfahren nach Anspruch 3, dadurch gekennzeichnet, daß die einzelnen Palettenlagen (1-8, 1A-8A) abwechselnd an den einen (10) und den jeweils anderen Palettierer (10A) übergeben werden.

5. Verfahren nach Anspruch 3, dadurch gekennzeichnet, daß die einzelnen Palettenlagen (1-8, 1A-8A) zunächst an einen Palettierer (10) zur Bildung je eines Teilstapels (T1 bzw. T2) und dann an den jeweils anderen Palettierer (10A) zur Bildung je eines Teilstapels (T 1A oder T2A bzw. T2A oder T1A) übergeben werden.

6. Verfahren nach Anspruch 3, dadurch gekennzeichnet, daß die einzelnen Palettenlagen (1-8, 1A-8A) zunächst zur Bildung des einen Stapels (18) an den einen Palettierer (10) und dann zur Bildung des jeweils anderen Stapels (18A) an den jeweils anderen Palettierer (10A) übergeben werden.

7. Palettiervorrichtung zur Durchführung des Verfahrens nach wenigstens einem der Anprüche 1 bis 6, mit einem eine erste Hebebühne (12) und einen sich im wesentlichen vertikal erstreckenden Rahmen (11) aufweisenden Palettierer (10), wobei die erste Hebebühne (12) beidseitig am Rahmen (11) heb- und senkbar befestigt ist, dadurch gekennzeichnet, daß dem Palettierer (10) eine zweite Hebebühne (13) zugeordnet ist, die unterhalb der ersten Hebebühne (12) liegt und die unabhängig von der ersten Hebebühne (12) heb- und senkbar angeordnet ist.

8. Palettiervorrichtung nach Anspruch 7, dadurch gekennzeichnet, die zweite Hebebühne (13) ebenfalls am sich vertikal erstreckenden Rahmen (11) des Palettierers (10) beidseitig geführt ist.

9. Palettiervorrichtung nach Anspruch 7, dadurch gekennzeichnet, daß die zweite Hebebühne (13) als Scherentischbühne ausgebildet ist.

10. Palettiervorrichtung nach wenigstens einem der Ansprüche 7 bis 9, dadurch gekennzeichnet, daß die erste Hebebühne (12) in einer Horizontalebene durch den Rahmen (11) hindurch zur anderen Seite des Rahmens (11) verschiebbar gelagert ist.

11. Palettiervorrichtung nach wenigstens einem der Ansprüche 7 bis 10, dadurch gekennzeichnet, daß die zweite Hebebühne (13) in ihrer maximalen Absenkstellung in einer Ebene mit einem Anförderband (18) liegt, auf dem einzelne Paletten (17) angefördert werden.

12. Palettiervorrichtung nach wenigstens einem der Ansprüche 7 bis 11, dadurch gekennzeichnet, daß der Palettierer (10) am stirnseitigen Ende eines Förderbandes (14) zur aufeinanderfolgenden Heranförderung der Palettenlagen (1-8) angeordnet ist.

13. Palettiervorrichtung nach wenigstens einem der Ansprüche 7 bis 11, dadurch gekennzeichnet, daß der Palettierer (10) seitlich an einem Förderband (14) zur aufeinanderfolgenden Heranförderung der Palettenlagen (1 bis 8) angeordnet ist.

14. Palettiervorrichtung nach wenigstens einem der Ansprüche 7 bis 13, dadurch gekennzeichnet, daß ein zusätzlicher, zweiter Palettierer (10A) mit einem Rahmen (11) sowie einer ersten und zweiten Hebebühne (12 und 13) vorgesehen ist.

15. Palettiervorrichtung nach Anspruch 14, dadurch gekennzeichnet, daß an beiden Seiten des Förderbandes (14) je ein Palettierer (10 und 10A) angeordnet ist.

**Claims**

1. Method for palettizing individual pallet layers (1 to 8), the individual pallet layers being conveyed lying successively on a conveying plane (F) to a stacking position (15) and being passed at said position to a palletizer (10) of a palletizing apparatus with formation of a stack (18) resting on a pallet (17), characterized in that a first lifting platform (12) of the palletizer (10) is lifted onto the conveying plane (F), in that the first pallet layer (1) is transferred from the stacking position (15) level with the conveying plane (F) onto the first lifting platform (12), in that the first lifting platform (12) is lowered by the height ($h_1$) of the first pallet layer (1) so that the surface of the first pallet layer (1) comes to rest in the conveying plane (F), in that a second pallet layer (2) is pushed from the stacking position (15) onto the first pallet layer (1), in that the first lifting platform (12) is again lowered by the height ($h_2$) of the second pallet layer (2) and a subsequent pallet layer (3) is pushed onto the second pallet layer (2), in that this lowering and transfer process continues until the first lifting platform (12) has reached its maximum lowering position ($P_1$) on the palletizer (10) and a first partial stack ($T_1$) has been formed, in that the first lifting platform (12) is raised to a position ($P_3$) in which it lies above the conveying plane (F) by at least one pallet layer, in that a second lifting platform (13) allocated to the palletizer which bears a pallet (17) is lifted into the conveying plane (F) such that the surface of the pallet (17) lies in the conveying plane (F), in that a further pallet layer (5) is transferred from the stacking position (15) onto the pallet of the second lifting platform (13), in that the lowering and transfer are carried out correspondingly by the second lifting platform (13) until the second lifting platform has reached its maximum lowering position and a second partial stack ($T_2$) has been formed, in that the first lifting platform (12) is lowered and driven away under the bottom surface of the first pallet layer (1) (direction of arrow $P_5$) so that the first pallet layer (1) comes to rest on the pallet layer (8) of the second lifting platform (13) and in that the stack (18) thus formed is driven out of the palletizer (10).

2. Method according to Claim 1, characterized in that the height ($h_1$, $h_2$, $h_n$) of the pallet layers (1 to 8) arriving at the stacking position is recorded optoelectronically or mechanically, and in that the lowering movement of the lifting platforms (12, 13) is controlled as a function of the measured height.

3. Method according to Claim 1 or 2, characterized in that individual pallet layers (1A–8A) are passed to an additional, second palletizer (10A) of the palletizing apparatus to form an additional, second stack (18A).

4. Method according to Claim 3, characterized in that the individual pallet layers (1–8, 1A–8A) are passed alternately to the one palletizer (10) and the respective other palletizer (10A).

5. Method according to Claim 3, characterized in that the individual pallet layers (1–8, 1A–8A) are firstly passed to a palletizer (10) to form a partial stack (T1 or T2) in each case and then to the respective other palletizer (10A) to form a partial stack (T1A or T2A or T2A or T1A) in each case.

6. Method according to Claim 3, characterized in that the individual pallet layers (1–8, 1A–8A) are firstly passed to the one palletizer (10) to form the one stack (18) and then to the respective other palletizer (10A) to form the respective other stack (18A).

7. Palletizing apparatus to carry out the method according to at least one of Claims 1 to 6 exhibiting a palletizer (10) having a first lifting platform (12) and a frame (11) extending essentially vertically, the first lifting platform (12) being attached to both sides of the frame (11) so as to be raisable and lowerable, characterized in that a second lifting platform (13) is allocated to the palletizer (10), which second lifting platform is located below the first lifting platform (12) and is arranged so as to be raisable and lowerable independently of the first lifting platform (12).

8. Palletizing apparatus according to Claim 7, characterized in that the second lifting platform (13) is likewise guided on both sides of hte frame (11), extending vertically, of the palletizer (10).

9. Palletizing apparatus according to claim 7, characterized in that the second lifting platform (13) is constructed as a shearing table platform.

10. Palletizing apparatus according to at least one of Claims 7 to 9, characterized in that the first lifting platform (12) is mounted displaceably in a horizontal plane through the frame (11) to the other side of the frame (11).

11. Palletizing apparatus according to at least one of Claims 7 to 10, characterized in that the second lifting platform (13) is located in its maximum lowering position in a plane with a feed belt (18) on which individual pallets (17) are fed.

12. Palletizing apparatus according to at least one of Claims 7 to 11, characterized in that the palletizer (10) is arranged at the front end of a conveyor belt (14) for successive feeding of the pallet layers (1–8).

13. Palletizing apparatus according to at least one of Claims 7 to 11, characterized in that the palletizer (10) is arranged laterally at a conveyor belt (14) for the successive feeding of the pallet layers (1 to 8).

14. Palletizing apparatus according to at least one of Claims 7 to 13, characterized in that an additional, second palletizer (10A) having a frame (11) and a first and second lifting platform (12 and 13) is provided.

15. Palletizing apparatus according to Claim 14, characterized in that one palletizer (10 and 10A) is arranged on each side of the conveyor belt (14).

**Revendications**

1. Procédé pour la palettisation de différentes couches de palettes (1 à 8), les différentes couches de palettes étant transportées en succession sur un plan de transport (F) vers une station d'empilage (15) où elles sont transférées, avec formation d'une pile (18) reposant sur une palette (17), à un palettiseur (10) d'un dispositif de palettisation, caractérisé en ce qu'une première plate-forme de levage (12) du palettiseur (10) est amenée à la hauteur du plan de transport (F); que la première couche de palettes (1) est transférée de la position d'empilage (15), à la hauteur du plan de transport (F), à la première plate-forme de levage (12); que la première plate-forme de levage (12) est abaissée de la hauteur (h1) de la première couche de palettes (1) de manière que la surface de la première couche de palettes (1) se situe au niveau du plan de transport (F); qu'une seconde couche de palettes (2) est poussée de la position d'empilage (15) sur la première couche de palettes (1); que la première plate-forme de levage (12) est à nouveau abaissée de la hauteur (h2) de la seconde couche de palettes (2) et qu'une couche de palettes suivante (3) est poussée sur la seconde couche de palettes (2); que cette opération de descente et de transfert est effectuée jusqu'à ce que la première plate-forme de levage (12) ait atteint sa position de descente maximale (P1) sur le palettiseur (10) et qu'une première pile partielle CT1) soit formée; que la première plate-forme de levage (12) est montée dans une position (P3) dans laquelle elle se trouve à au moins une couche de palettes au-dessus du plan de transport (F); qu'une seconde plate-forme de levage (13) associée au palettiseur et portant une palette (17) est soulevée dans le plan de transport (F) de telle façon que la surface de la palette (17) de situe dans le plan de transport (F); qu'une autre couche de palettes (5) est amenée de la position d'empilage (15) sur la palette de la seconde plate-forme de levage (13); que la descente et le transfert avec la seconde plateforme de levage (13) sont effectués de manière analogue jusqu'à ce que la seconde plate-forme de levage ait atteint sa position de descente maximale et qu'une seconde pile partielle (T2) soit formée; que la première plate-forme de levage (12) est abiassée et retirée d'en dessous de la surface inférieure de la première couche de palettes (1) (direction de la flèche P5) de sorte que la première couche de palettes (1) repose sur la couche de palettes supérieure (8) de la seconde plate-forme de levage (13); et que la pile (18) ainsi formée peut être sortie du palettiseur (10).

2. Procédé selon la revendication 1, caractérisé en ce que la hauteur (h1, h2, hn) des couches de palettes (1 à 8) arrivant à la position d'empilage, est détectée de manière optoélectronique ou mécanique; et que le mouvement de descente des plateformes de levage (12, 13) est commandé en fonction de la hauteur mesurée.

3. Procédé selon l'une des revendications 1 ou 2, caractérisé en ce que les différentes couches de palettes (1A à 8A) sont transférées pour la formation d'une seconde pile supplémentaire (18A) à un second palettiseur supplémentaire (10A) du dispositif de palettisation.

4. Procédé selon la revendication 3, caractérisé en ce que les différentes couches de palettes (1 à 8, 1A à 8A) sont transférées alternativement à l'un (10) et respectivement à l'autre palettiseur (10A).

5. Procédé selon la revendication 3, caractérisé en ce que les différentes couches de palettes (1 à 8, 1A à 8A) sont transférées tout d'abord à un palettiseur (10) pour la formation de respectivement une pile partielle (T1 et respectivement T2), puis à l'autre palettiseur (10A) pour la formation de respectivement une pile partielle (T1A ou T2A et respectivement T2A ou T1A).

6. Procédé selon la revendication 3, caractérisé en ce que les différentes couches de palettes (1 à 8, 1A à 8A) sont transférées tout d'abord à un palettiseur (10) pour la formation d'une pile (18) et ensuite à l'autre palettiseur (10A) pour la formation de l'autre pile (18A).

7. Dispositif de palettisation pour la mise en œuvre du procédé selon au moins l'une des revendications 1 à 6, comprenant une première plate-forme de levage (12) et un palettiseur (10) comportant un cadre (11) qui s'étend sensiblement verticalement, la première plate-forme de levage (12) étant montée des deux côtés sur le cadre (11) de façon à pouvoir monter et descendre, caractérisé en ce qu'au palettiseur (10) est associée une seconde plate-forme de levage (13) qui se situe au-dessous de la première plate-forme de levage (12) et qui peut être montée et descendue indépendamment de la première plate-forme de levage (12).

8. Dispositif de palettisation selon la revendication 7, caractérisé en ce que la seconde plate-forme de levage (13) est, elle aussi, guidée des deux côtés sur le cadre (11) d'extension verticale du palettiseur (10).

9. Dispositif de palettisation selon la revendication 7, caractérisé en ce que la seconde plate-forme de levage (13) est conformée en plate-forme à parallélogramme articulé.

10. Dispositif de palettisation selon au moins l'une des revendications 7 à 9, caractérisé en ce que la première plate-forme de levage (12) est montée dans un plan horizontal de façon à pouvoir être déplacée au travers du cadre (11) vers l'autre côté dudit cadre (11).

11. Dispositif selon au moins l'une des revendications 7 à 10, caractérisé en ce que, dans sa position de descente maximale, la seconde plate-forme de levage (13) se situe au même niveau qu'une bande transporteuse d'amenée (18) sur laquelle les différentes palettes (17) sont amenées.

12. Dispositif selon au moins l'une des revendications 7 à 11, caractérisé en ce que le palettiseur (10) est installé à l'extrémité frontale d'une bande transporteus (14) pour l'amenée successive des couches de paletttes (1 à 8).

13. Dispositif de palettisation selon au moins l'une des revendications 7 à 11, caractérisé en ce que le palettiseur (10) est installé latéralement par rapport à une bande transporteuse (14) pour l'amenée successive des couches de palettes (1 à 8).

14. Dispositif de palettisation selon au moins l'une des revendications 7 à 13, caractérisé en ce qu'il est prévu un second palettiseur supplémentaire (10A) avec un cadre (11) ainsi qu'avec une première et une seconde plate-forme de levage (12 et 13).

15. Dispositif de palettisation selon la revendication 14, caractérisé en ce que respectivement un palettiseur (10 et 10A) est installé de chaque côté de la bande transporteuse (14).

FIG.1    FIG.2    FIG.3

EP 0 283 042 B1

FIG. 4

EP 0 283 042 B1

FIG.5

FIG. 6

FIG.7

EP 0 283 042 B1